# EUROPEAN PATENT APPLICATION

(11) **EP 4 708 486 A1**
(43) Date of publication of application: **11.03.2026**
(21) Application number: 25195263.6
(22) Date of filing: 12.08.2025
(51) Int. Cl.: H01M 50/169, H01M 50/102, H01M 50/148

(54) **BATTERY AND METHOD FOR MANUFACTURING THE SAME**

(30) Priority: 09.09.2024 KR 20240122505
(71) Applicant: SAMSUNG SDI CO., LTD., Yongin-si, Gyeonggi-do 17084 (KR)
(72) Inventor: YOO, Wheesang, 17084 Yongin-Si Gyeonggi-do (KR); KIM, Minwoo, 17084 Yongin-Si, Gyeonggi-do (KR)
(74) Representative: Gulde & Partner

(57) **Abstract**

A battery (100), including a case (120) including a protrusion (121, 121a) protruding from an upper surface (124) thereof, the protrusion (121, 121a) including an inner step surface (125) and an outer step surface (126), and an electrode assembly being accommodated in the case (120), a cap plate (110, 110') including a groove portion (115) on a lower surface (114) thereof corresponding to the protrusion (121, 121a), wherein the protrusion (121, 121a) is inserted into the groove portion (115) to couple the cap plate (110, 110') to the case (120), and a welding portion (130) at a boundary of the case (120) and the cap plate (110, 110').

## Description

### BACKGROUND

### 1. Field

Embodiments relate to a battery and a method for manufacturing the same.

### 1. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

Embodiments include a battery, including a case including a protrusion protruding from an upper surface thereof, an inner step surface and an outer step surface, an electrode assembly being accommodated in the case, a cap plate including a groove portion corresponding to the protrusion on a lower surface thereof, wherein the protrusion is inserted into the groove portion to couple the cap plate to the case, and a welding portion at a boundary of the case and the cap plate.

The protrusion may include a fixed portion and an elastic portion, a side wall of the fixed portion may be in contact with the outer step surface, and a side wall of the elastic portion may be in contact with the inner step surface.

A separation space may be between the elastic portion and the fixed portion, wherein a separation distance between the elastic portion and the fixed portion may increase as it goes in a protruding direction, and the elastic portion may be elastically deformable using the separation space.

The elastic portion may face an inside of the case, and the fixed portion may face the outside of the case.

The elastic portion may include an insertion surface that may be an inclined surface with respect to a direction in which the elastic portion is inserted into the groove portion.

The groove portion may include an insertion guiding portion that may be an inclined surface guiding insertion of an insertion surface.

If the protrusion is inserted into the groove portion, the protrusion may press the groove portion laterally by an elastic restoring force of the elastic portion.

The protrusion may be in a straight extension section of the case.

The welding portion may be at a boundary formed by the outer step surface of the case and a lower surface of the cap plate.

A dent portion may be on a side wall of the groove portion.

A projection portion corresponding to the dent portion may be on the side wall of an elastic portion.

At least one of the case and the cap plate may include stainless steel.

Embodiments include a method for manufacturing a battery, the method including coupling a case to a cap plate, the case accommodating an electrode assembly therein, irradiating a boundary between the case and the cap plate with a laser beam, rotating the cap plate to move the boundary to a location of the laser beam, stopping the irradiating when a welding portion is along the boundary, and forming an inner step surface and an outer step surface on a protrusion protruding from an upper surface of the case, and inserting the protrusion in a groove portion, the inserting resulting in coupling of the case and the cap plate, wherein the cap plate includes a groove portion corresponding to the protrusion on a lower surface thereof.

The method may further include removing foreign substances from the boundary using air sprayed by a blower before the irradiating.

The method may further include removing foreign substances from the boundary using air sprayed by a blower during the irradiating.

A size of the welding portion may correspond to a heat-affected portion from a surface where the laser beam contacts the boundary, and a depth of the heat-affected portion may be 500 to 700 micrometers from the surface.

The welding portion may be at the boundary formed by the outer step surface of the case and the lower surface of the cap plate.

At least one of the case and the cap plate may include stainless steel.

The case and the cap plate may be coupled by a shape-coupling between a groove portion and a protrusion corresponding to each other.

The protrusion may include a fixed portion and an elastic portion that may be elastically deformed if inserted into the groove portion, and a coupling state of the case and the cap plate may be maintained by an elastic restoring force of the elastic portion.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

However, aspects and features of the present disclosure are not limited to those described above, and other aspects and features not mentioned will be clearly understood by a person skilled in the art from the detailed description, described below.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.

Features will become apparent to those of ordinary skill in the art by describing in detail exemplary embodiments with reference to the attached drawings, in which:
FIG. 1A illustrates a bottom side perspective view of a cap plate according to one or more embodiments of the present disclosure;
FIG. 1B illustrates a top plan side perspective view of a case according to one or more embodiments of the present disclosure;
FIG. 2 illustrates an enlarged view of a welding portion in the battery according to one or more embodiments of the present disclosure;
FIG. 3 illustrates a coupling structure between the protrusion and the groove according to one or more embodiments of the present disclosure;
FIG. 4 illustrates the case side and the cap plate side being coupled to each other according to one or more embodiments of the present disclosure;
FIG. 5 illustrates the elastic portion and the groove portion being disposed adjacent to each other according to one or more embodiments of the present disclosure;
FIG. 6A illustrates a first heat-affected portion according to one or more embodiments of the present disclosure;
FIG. 6B illustrates the second heat-affected portion according to one or more embodiments of the present disclosure;
FIG. 7 illustrates a case according to one or more embodiments of the present disclosure;
FIG. 8 illustrates a cap plate according to one or more embodiments of the present disclosure;
FIG. 9 illustrates a flowchart of a method for manufacturing the battery according to one or more embodiments of the present disclosure;
FIG. 10A is a drawing showing the removal of foreign substances at the boundary between the case and the cap plate by spraying air with a blower according to one or more embodiments of the present disclosure;
FIG. 10B is a drawing showing the irradiation of the laser beam at the boundary between the case and the cap plate according to one or more embodiments of the present disclosure;
FIG. 11 illustrates that the irradiation of the laser beam is performed at the same time while the air is sprayed by the blower prepared according to one or more embodiments of the present disclosure;
FIG. 12 illustrates that the laser nozzle according to one or more embodiments of the present disclosure approaches the boundary between the case and the cap plate;
FIG. 13A illustrates the approach of the laser nozzle according to one or more embodiments of the present disclosure; and
FIG. 13B illustrates that welding is performed at a constant interval by the separation distance according to one or more embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her embodiments in the best way.

The embodiments described in this specification and the configurations shown in the drawings are only some of the embodiments of the present disclosure and do not represent all of the technical scope, aspects, and features of the present disclosure as defined by the appended claims. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

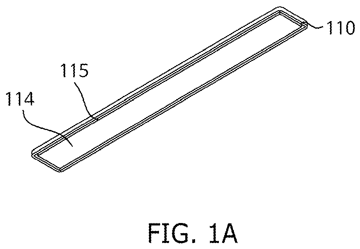

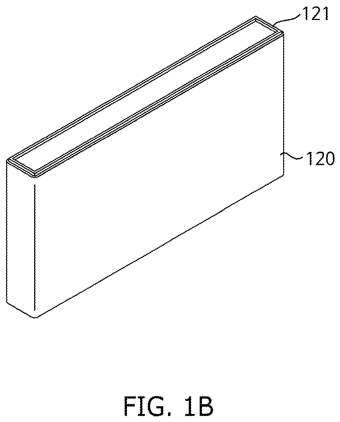

FIG. 1A illustrates a bottom side perspective view of a cap plate 110 according to one or more embodiments of the present disclosure, and FIG. 1B illustrates a top plan side perspective view of a case 120.

Referring to FIGS. 1A and 1B, the cap plate 110 and case 120 to be bonded to each other by welding can be assembled before welding is performed. As shown, a groove portion 115 may be formed on a lower surface 114 of the cap plate 110, and a protrusion 121 may be formed on the case 120. The groove portion 115 and the protrusion 121 are provided to face each other, and may be aligned so that the protrusion 121 may be inserted into the groove portion 115. Here, the cap plate 110 and the case 120 may be made of a material including a metal material, and may include, for example, stainless steel (SUS).

The case 120 may accommodate an electrode assembly therein. The electrode assembly may be formed by alternately stacking a plurality of first electrodes, separators, and second electrodes formed in a thin plate shape or a film shape. The electrode assembly may be of stack type. As another example, the electrode assembly may be a Z-stack electrode assembly in which the first electrode and the second electrode are inserted into opposite sides of a separator folded into a Z-stack. The first electrode of the electrode assembly may serve as a positive electrode, and the second electrode may serve as a negative electrode. The opposite is also possible.

The first electrode may be formed by applying a first electrode active material such as a transition metal oxide on a first electrode substrate formed of a metal foil such as aluminum or an aluminum alloy, and may include a first electrode tab (or a first uncoated portion), which is a region in which the first electrode active material is not applied. The first electrode tab may serve as a current flow path between the first electrode and the first current collector plate.

The second electrode may be formed by applying a second electrode active material such as graphite or carbon on a second electrode substrate formed of a metal foil such as a metal foil such as copper, a copper alloy, nickel, or a nickel alloy, and may include a second electrode tab (or a second uncoated portion), which is a region in which the second electrode active material is not applied. The second electrode tab may serve as a current flow path between the second electrode and the second current collector plate.

The separator may prevent a short circuit between the first electrode and the second electrode while allowing lithium ions to move. The separator may be configured of, for example, a polyethylene film, polypropylene film, polyethylene-polypropylene film, or other appropriate materials.

A plurality of first electrode tabs and a plurality of second electrode tabs may be spaced apart from each other and may be disposed on an upper side of the electrode assembly. Herein, this is for convenience of description based on the illustrated case, and the position thereof may change in a case of being rotated left and right, or up and down.

The case 120 may form an overall appearance of the battery 100. The case 120 may be made of a conductive metal such as aluminum, an aluminum alloy, or nickel-plated steel. In some embodiments, the case 120 may be made of stainless steel (SUS).

The cap plate 110 may seal an open side of the case 120. The cap plate 110 may include an electrode hole, an electrolyte injection port, and a vent portion. The cap plate 110 may be welded to the case 120.

The electrode hole may be formed on the cap plate 110. The electrode hole may include a first electrode hole and a second electrode hole. The first terminal portion inserted into the first electrode hole may be electrically connected to the first electrode. The second terminal portion inserted into the second electrode hole may be electrically connected to the second electrode. The electrolyte may be injected into the case 120 through the electrolyte injection port. The electrolyte injection port may be sealed using a sealing member such as a stopper or the like after the electrolyte injection is completed. The vent portion may be formed by coupling a vent member into a vent hole formed on the cap plate 110. The vent portion may prevent explosion of the battery or a chain reaction of heating of other batteries disposed in close proximity to the battery. For example, the vent portion may be configured to open in a case where the internal pressure of the battery exceeds a predetermined critical pressure. The critical pressure may be set differently depending on the application field, material, and purpose of the battery. As another example, the vent portion may be configured to open in a case where the internal temperature exceeds a predetermined threshold temperature.

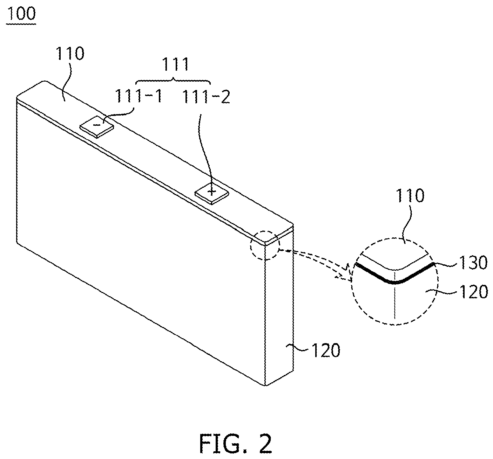

FIG. 2 illustrates an enlarged view of a welding portion 130 in the battery 100 according to the embodiment of the present disclosure. Referring to FIG. 2, the battery 100 may be provided with a terminal 111 including a negative terminal 111-1 and a positive terminal 111-2 of the cap plate 110. The cap plate 110 may be coupled to the case 120 in an assembled state. Herein, coupling may mean coupling by welding. Welding may be performed through laser welding or the like, and a welding portion 130 formed by welding may be formed between the cap plate 110 and the case 120.

The welding portion 130 may be formed on a side surface of the battery 100. The side surface may be a side surface of the battery 100 in a structure in which the cap plate 110 is disposed on the upper side and the case 120 is disposed on the lower side. A boundary where the case 120 and the cap plate 110 are in contact with each other may be formed on a side surface of the battery, and the welding portion 130 may be formed at the boundary. Accordingly, the electrolyte and the electrode assembly accommodated in the case 120 may be sealed in the case 120.

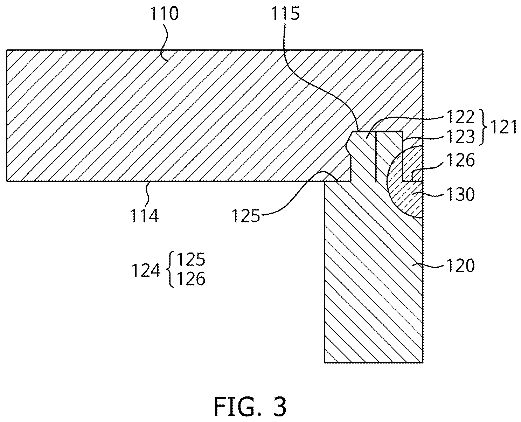

FIG. 3 illustrates a coupling structure between the protrusion 121 and the groove portion 115 according to one or more embodiments of the present disclosure.

Referring to FIG. 3, the battery 100 may include a cap plate 110, a case 120 coupled to the cap plate 110, and a welding portion formed at a boundary surface between the cap plate 110 and the case 120. An upper surface 124 of the case 120 and a lower surface 114 of the cap plate 110 may be bonded to each other, so that the cap plate 110 and the case 120 may be coupled to each other.

On the upper surface 124 of the case 120, a protrusion 121 protruding from the upper surface 124 may be formed to have an inner step surface 125 and an outer step surface 126. The upper surface 124 of the case 120 may include the inner step surface 125 and the outer step surface 126. The protrusion 121 protruding from the upper surface 124 is formed on the upper surface 124 of the case 120, and thus the protrusion 121 may have a step with the upper surface 124. The step surfaces 125 and 126 may be formed on the upper surface 124 by the step between the protrusion 121 and the upper surface 124. Among the step surfaces 125 and 126 formed on the upper surface 124 of the case 120, the inner step surface 125 is disposed adjacent to the electrode assembly accommodated in the case 120, and the outer step surface 126 is disposed adjacent to the outer surface of the case 120 exposed to the outside.

The lower surface 114 of the cap plate 110 may include a groove portion 115 corresponding to (e.g., mating or aligning with) the protrusion 121. The case 120 and the cap plate 110 may be coupled by inserting the protrusion 121 into the groove portion 115.

A welding portion 130 may be formed at a boundary between the case 120 and the cap plate 110 coupled to each other. The protrusion 121 includes an elastic portion 122 and a fixed portion 123, a side wall of the fixed portion 123 may contact the outer step surface 126, and a side wall of the elastic portion 122 may contact the inner step surface 125.

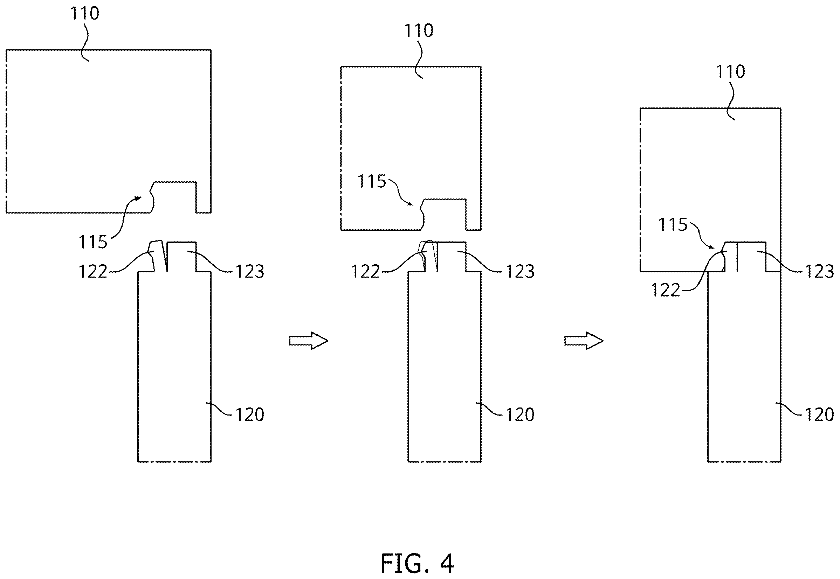

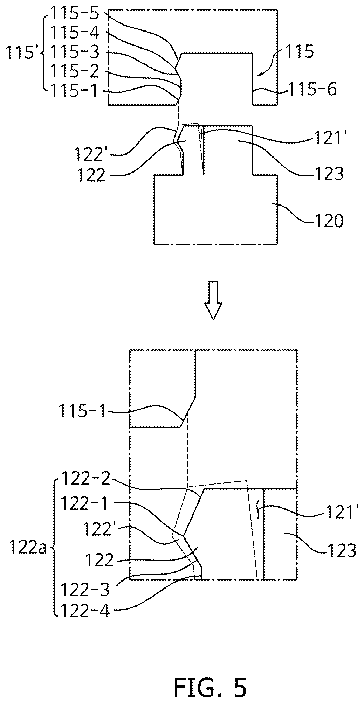

For example, the protrusion 121 protruding upward from the upper surface 124 may be inserted and fixed into the groove portion 115 formed on the lower surface 114 of the cap plate 110. In this regard, it will be described in detail with reference to FIG. 4 and FIG. 5 below.

The welding portion 130 may be formed at a point where the cap plate 110 and the case 120 are in contact with each other. Because the point of contact is formed along the side perimeter of the battery 100, the welding portion 130 may be formed on the side surface of the battery 100. For example, the point where the cap plate 110 and the case 120 are in contact with each other may be a point where the outer step surface 126 and the outermost side of the lower surface of the cap plate 110 contact each other in a vertical direction (in the orientation shown). Therefore, in a case where the welding portion 130 is formed by laser welding, the heat-affected portion by the laser beam 11 may be radially extended from the outer step surface 126.

FIG. 4 illustrates the case 120 side and the cap plate 110 side being coupled to each other according to one or more embodiments of the present disclosure.

Referring to FIG. 4, before the case 120 and the cap plate 110 are coupled to each other by welding, a coupling between the protrusion 121 and the groove portion 115 provided on the case 120 and the cap plate 110 may be made. The case 120 and the cap plate 110 may be coupled to each other by the elastic portion 122 and the fixed portion 123 provided in the protrusion 121, and the coupled state may be elastically supported by an elastic force of the elastic portion 122.

As shown in FIG. 4, the elastic portion 122 may be spaced apart from the fixed portion 123 by a predetermined distance. In the coupling between the groove portion 115 and the protrusion 121, the elastic portion 122 may be deformed as shown in the middle section of FIG. 4, and the deformation of the elastic portion is an elastic deformation, and may be elastically restored to its shape before the deformation after the deformation. Accordingly, in a state where the protrusion 121 is inserted into the groove portion 115 as shown in the right section of FIG. 4, the bonding state may be supported by the elastic force generated during the elastic recovery process of the elastic portion 122. Hereinafter, a corresponding structure in which the protrusion 121 and the groove portion 115 may be coupled to each other will be described.

FIG. 5 illustrates the elastic portion 122 and the groove portion 115 being disposed adjacent to each other according to one or more embodiments of the present disclosure.

Referring to FIG. 5, according to one or more embodiments of the present disclosure, a separation space 121' is formed between the elastic portion 122 and the fixing portion 123, and a separation distance between the elastic portion 122 and the fixing portion 123 may increase in a protruding direction. The elastic portion 122 may be elastically deformed using the separation space 121'. As illustrated, the elastic portion 122 may be disposed to face the inner side of the case 120, and the fixing portion 123 may be disposed to face the outer side of the case 120. The inner side may correspond to a direction facing the inside of the case in which the electrode assembly is accommodated, and the outer side may correspond to a direction facing the outside of the case.

The separation space 121' is formed between the elastic portion 122 (before deformation) and the fixed portion 123. In the process of inserting the protrusion 121 into the groove portion 115, the elastic portion 122 may be deformed by the separation space 121' and inserted into the groove portion 115. A dent portion 115' corresponding to (e.g., matable with) the projection portion 122a of the elastic portion 122 may be formed on the side wall of the groove portion 115. The dent portion 115' may include an insertion guiding portion 115-1, a sliding portion 115-2, a first inclined portion 115-3, a peak corresponding portion 115-4, and a second inclined portion 115-5. A support portion 115-6 may be formed on the other side wall of the groove portion 115. The projection portion 122a corresponding to the dent portion 115' in the protrusion 121 may include a peak portion 122-1, an insertion surface 122-2, an inclined surface 122-3, and an extension surface 122-4.

In a case where the protrusion 121 is inserted into the groove portion 115, the insertion surface 122-2 may be in contact with the insertion guiding portion 115-1. The direction of inclination with respect to the horizontal direction may be the same for the insertion surface 122-2 and the insertion guiding portion 115-1. The elastic portion 122 may be deformed according to the guidance of the insertion guiding portion 115-1 by the elasticity of the elastic portion 122. In this case, the end portion of the fixed portion 123 may be disposed in the inner space of the groove portion 115.

The insertion surface 122-2 may be formed as an inclined surface with respect to a direction in which the protrusion 121 is inserted into the groove portion 115. The insertion surface 122-2 may be disposed below the insertion guiding portion 115-1 in a case where the protrusion 121 is disposed to correspond to the groove portion 115. The groove portion 115 may include an insertion guiding portion 115-1 which is an inclined surface for guiding the insertion of the insertion surface 122-2. With this structure, while the protrusion 121 is inserted into the groove portion 115, the insertion surface 122-2 is guided to the insertion guiding portion 115-1, so that the elastic portion 122 may be elastically deformed.

In a state in which the elastic portion 122 and the fixed portion 123 are in close contact with each other without the separation space 121' due to elastic deformation during the insertion process, the peak portion 122-1 may contact the sliding portion 115-2. While the protrusion 121 is inserted into the groove portion 115, the peak portion 122-1 may slide with respect to the sliding portion 115-2. The insertion surface 122-2, the peak portion 122-1, and the inclined surface 122-3 may be seated so as to correspond to each other on the first inclined portion 115-3, the peak corresponding portion 115-4, and the second inclined portion 115-5 disposed at the upper portion of the sliding portion 115-2. The extension surface 122-4 is in contact with the sliding portion 115-2, and for example, the extension surface 122-4 may press the sliding portion 115-2 by the elastic restoring force of the elastic portion 122. In some embodiments, the fixed portion 123 may also be in a state of pressing the support portion 115-6 by the reaction force of the elastic restoring force. For example, in a case where the protrusion 121 is inserted into the groove portion 115, the protrusion 121 may press the groove portion 115 laterally by the elastic restoring force of the elastic portion 122.

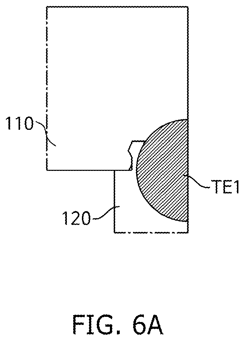

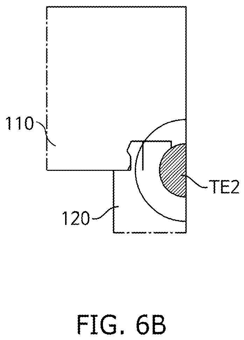

FIG. 6A illustrates a first heat-affected portion TE1 according to one or more embodiments of the present disclosure, and FIG. 6B illustrates the second heat-affected portion TE2, according to one or more embodiments of the present disclosure.

Referring to FIGS. 6A and 6B, as described above, in a case where the coupling between the case 120 and the cap plate 110 is completed, the case 120 and the cap plate 110 may be welded and coupled. Because the welding portion 130 is formed on the side surface of the battery 100 which is the boundary between the case 120 and the cap plate 110, the welding portion 130 may be formed around the periphery extending along the side surface of the battery 100. The size of the welding portion 130 corresponds to the depth of the heat-affected portion measured from the boundary, which is the surface on which the laser beam 11 reaches (e.g., where it contacts the boundary), and the depth of the heat-affected portion may be 500 to 700 micrometers from the side surface.

The welding portion 130 may be formed to extend from the outer step surface 126 according to a welding depth. For example, in a case where the welding depth is 700 micrometers, a relatively large first heat-affected portion TE1 may be formed as shown in FIG. 6A, and in a case where the welding depth is 500 micrometers, a relatively small (compared to TE1) second heat-affected portion TE2 may be formed as shown in FIG. 6B.

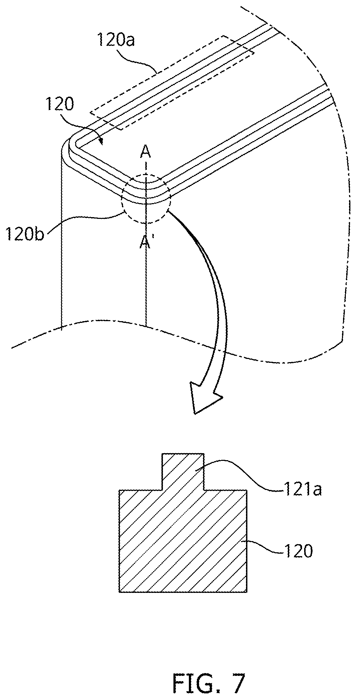

FIG. 7 illustrates a straight portion and a curved portion of a case 120 according to one or more embodiments of the present disclosure.

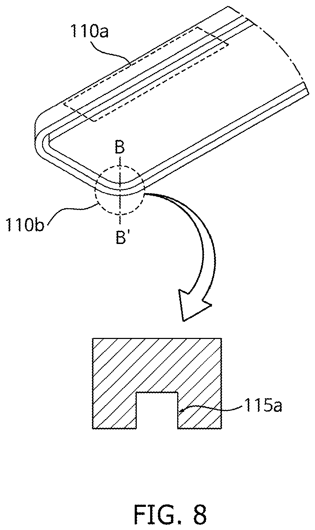

FIG. 8 illustrates a straight portion 110a and a curved portion 110b of the cap plate in which the groove portion 115 is formed.

Referring to FIG. 7 and FIG. 8, the protrusion 121 may be formed in a straight extension section of the case 120. In order for the elastic portion 122 to be deformed during the process of coupling the protrusion 121 and the groove portion 115, a space for the deformation of the elastic portion 122 may be required. In the case of the straight portions 110a and 120a, the protrusion 121 and the groove portion 115 using the elastic deformation of the elastic portion 122 may be coupled.

In some embodiments, in the case of the curved portions 110b and 120b, the elastic portion 122 extends in the curved direction, and thus may be formed to have an arc shape. In a case where the elastic portion 122 is deformed in the centrifugal direction of the arc, interference occurs between the elastic portions 122, and thus elastic deformation of the elastic portion 122 may be impossible. Accordingly, the elastic portion 122 may not be formed in the area corresponding to the curved portion 110b. In some embodiments, in a case where a plurality of elastic portions 122 are provided to be spaced apart from each other and disposed at predetermined intervals along the curved portion 110b, interference may not occur. In this case, the elastic portion 122 may also be formed in the area corresponding to the curved portion 110b.

In this example, in the case of the protrusion 121a formed on the curved portion 120b, as shown in FIG. 7 showing the cross section taken along line A-A', the protrusion 121a may be integrally provided without being divided into the elastic portion 122 and the fixing portion 123. For example, the elastic portion 122 may not be formed in the area corresponding to the curved portion 120b.

The protrusion 121a may be inserted into the groove portion 115a as shown in FIG. 8 showing a cross section taken along line B-B'. Herein, the groove portion 115a is not provided with the dent portion 115a, and the protrusion 121a is not provided with the projection portion 122a. Therefore, they are formed on a flat surface with each other and may be coupled simply by insertion without a fixed structure. However, this coupling does not generate support force through the elastic portion 122. Accordingly, in the structures of the case 120 and the cap plate 110 of FIG. 7 and FIG. 8, the coupled state may be maintained by coupling between the protrusion 121 and the groove portion 115 provided in the straight portion 110a.

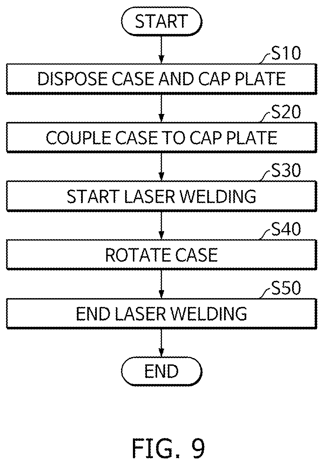

FIG. 9 illustrates a flowchart of a method for manufacturing the battery 100 according to one or more embodiments of the present disclosure. Referring to FIG. 9, the method of manufacturing the battery 100 may include disposing the case and the cap plate (S10); coupling a case and a cap plate in which the electrode assembly is accommodated (S20); irradiating a laser beam to a boundary of the case and the cap plate (S30); rotating one of the cap plate and the case so that the boundary reaches a point where the laser beam is currently located (S40); and stopping the laser irradiation in a case where a welding portion is formed along the boundary (S50).

As described above, the coupling between the case 120 and the cap plate 110 may be achieved by the shape-coupling between the protrusion 121 and the groove portion 115. The shape-coupling refers to a coupling by assembly between corresponding shapes formed between the protrusion 121 and the groove portion 115. The protrusion 121 includes an elastic portion 122 and a fixed portion 123, and the coupled state of the case 120 and the cap plate 110 may be maintained by the elastic restoring force of the elastic portion 122 that is elastically deformed.

In some embodiments, the welding portion 130 may be formed in an area in which the case 120 and the cap plate 110 are in contact with each other. For example, it may be positioned at a boundary formed by the outer step surface 126 of the case 120 and the lower surface 114 of the cap plate 110. Because the laser beam 11 reaches the outermost side of the boundary and welding is performed, the area of the welding portion 130 may be extended to a predetermined range in the inward direction from the boundary positioned at the outermost side. At least one of the case 120 and the cap plate 110 may be made of stainless steel (SUS), or may be made of a metal material including a stainless steel material.

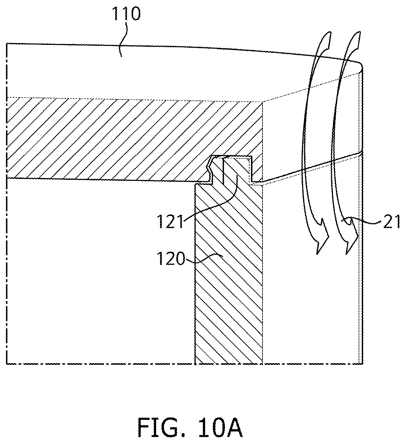

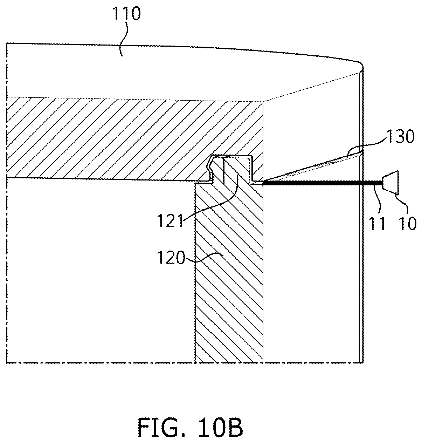

FIG. 10A is a drawing showing the removal of foreign substances at the boundary between the case 120 and the cap plate 110 by spraying air 21 with a blower according to one or more embodiments of the present disclosure, and FIG. 10B is a drawing showing irradiation by the laser beam 11 at the boundary between the case 120 and the cap plate 110 according to one or more embodiments of the present disclosure.

Referring to FIGS. 10A and 10B, before conducting laser irradiation, a step of removing foreign substances at the boundary by the air 21 sprayed by a blower (not shown) may be further included. During laser irradiation, foreign substances remain on the surface where the laser beam 11 is currently located, and laser welding quality may be deteriorated due to the foreign substances. In the case of the current embodiment of the present disclosure, because the surface to be welded is formed on the side surface so that foreign substances may fall due to its own weight, the possibility of foreign substances remaining may be reduced.

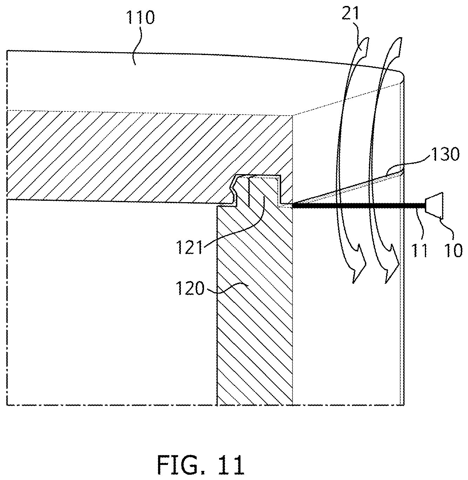

However, during the laser welding process, foreign substances may be removed more actively by spraying the air 21 using the blower. For example, as in FIG. 10A, the air 21 may be sprayed in advance by the blower before irradiation by the laser beam 11, and then the irradiation of the laser beam 11 may be performed subsequently, as in FIG. 10B. In some embodiments, as shown in FIG. 11, the spraying of the air 21 by the blower may be performed together with laser irradiation.

FIG. 11 illustrates that the irradiation of the laser beam 11 is performed at the same time while the air 21 is sprayed by the blower prepared according to one or more embodiments of the present disclosure. Referring to FIG. 11, according to the embodiment of the present disclosure, a step of removing foreign substances from the boundary by the air 21 sprayed by the blower along with the irradiation of the laser beam 11 may be further included. Herein, the spraying of the air 21 may be directed to the point where the laser beam 11 is irradiating (e.g., currently irradiating), or the air 21 may be sprayed ahead of the point where the laser beam 11 is irradiating. Irradiation by the laser beam 11 is performed until welding is completed, and the boundary formed by the outer step surface 126 of the case 120 and the lower surface 114 of the cap plate 110 may be positioned at the point where the laser beam 11 is currently located.

The laser beam 11 may irradiate the side surface of the battery through the laser nozzle 10. The boundary to which the irradiating laser beam 11 contacts may correspond to a straight line or a curved line, and welding may be performed along the boundary to form the welding portion 130. A rotatable base clamp or the like may be provided for linear or curved movement of the laser nozzle 10, and the rotational trajectory of the laser nozzle 10 may correspond to the shape of the welding portion 130. In some embodiments, instead of the laser nozzle 10 moving, the battery may move. A rotatable base clamp or the like may be provided for linear or curved movement of the battery.

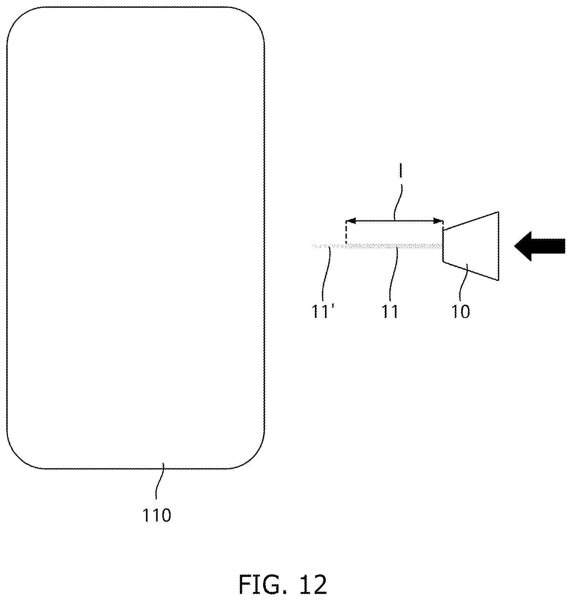

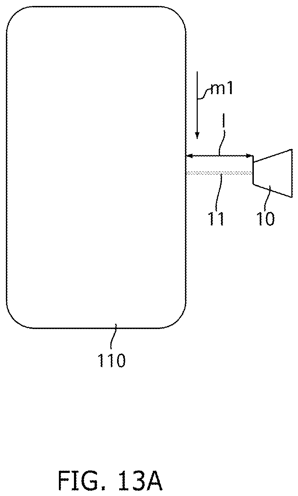

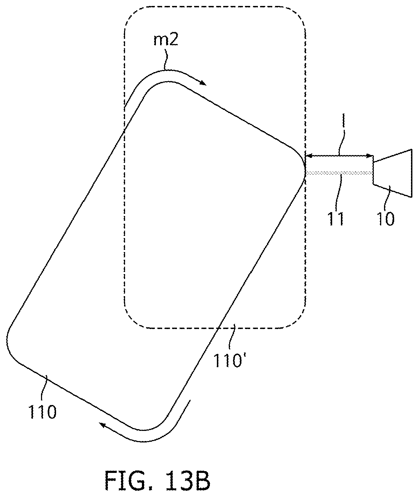

FIG. 12 is a plan view illustrating that the laser nozzle 10 according to one or more embodiments of the present disclosure approaches the boundary between the case 120 and the cap plate 110. FIG. 13A illustrates the approach of a laser nozzle 10 to cap plate 110 according to one or more embodiments of the present disclosure, and FIG. 13B illustrates that welding is performed at a constant interval by the separation distance (l) according to one or more embodiments of the present disclosure.

Referring to FIG. 12 and FIGS. 13A and 13B, the output of the laser beam 11 may be determined according to a distance between the laser nozzle 10 and the boundary. For example, as the distance increases, the output transmitted to the laser's target point may decrease. For example, the laser beam 11' irradiating from a relatively long distance may be transmitted with a lower output than the laser beam 11 irradiating from a closer distance. The rotational speed of the base clamp may also be a factor determining the output of the laser 11. For example, the speed of movement of the cap plate 110 moved by the base clamp during irradiation by the laser beam 11 from the position of the cap plate 110' at the time the laser beam first reached before movement may also be a factor in determining the output of the laser beam 11. Therefore, in a case where the laser beam 11 is of constant output, the boundary may be rotated and moved at a predetermined speed in the direction of linear movement (m1) and curved movement (m2) while maintaining the separation distance (l) from the laser nozzle 10.

During the manufacturing process of these batteries, a step may occur in a case where the case and the cap plate are coupled to each other. The occurrence of steps may cause problems such as bullet marks, non-weld welding, and flat beads due to laser reflection during welding. In addition, during the temporary welding and main welding processes, residual foreign matter from materials and mechanical parts may be positioned around the upper welding area, which may cause a deterioration in welding quality, such as the formation of dents, protrusions, cracks, and leaks. Conventionally, welding is performed by moving the laser from the upper portion of the cell, but in this case, defective welding cells occur due to foreign matter accumulated at the upper portion of the cell. Therefore, it is very important to overcome these problems and improve welding quality.

The present disclosure provides a battery and a method for manufacturing the same in which a boundary between a case and a cap plate is disposed on a side surface to prevent laser reflection and non-welding caused by a step between the case and the cap plate and to prevent accumulation of foreign substances.

Although the present disclosure has been described above with respect to embodiments thereof, the present disclosure is not limited thereto. Various modifications and variations can be made thereto by those skilled in the art within the scope of the present disclosure as defined by the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the appended claims.

## Claims

1. A battery (100), comprising:
a case (120) including a protrusion (121, 121a) protruding from an upper surface (124) thereof, the protrusion (121, 121a) including an inner step surface (125) and an outer step surface (126), and an electrode assembly being accommodated in the case (120);
a cap plate (110, 110') comprising a groove portion (115) on a lower surface (114) thereof corresponding to the protrusion (121, 121a), wherein the protrusion (121, 121a) is inserted into the groove portion (115) to couple the cap plate (110, 110') to the case (120); and
a welding portion (130) at a boundary of the case (120) and the cap plate (110, 110').

2. The battery (100) as claimed in claim 1, wherein:
the protrusion (121, 121a) comprises a fixed portion (123) and an elastic portion (122),
a side wall of the fixed portion (123) is in contact with the outer step surface (126), and
a side wall of the elastic portion (122) is in contact with the inner step surface (125).

3. The battery (100) as claimed in claim 2, wherein:
a separation space (121') is between the elastic portion (122) and the fixed portion (123),
a separation distance between the elastic portion (122) and the fixed portion (123) increases as it goes in a protruding direction, and
the elastic portion (122) is elastically deformable using the separation space (121').

4. The battery (100) as claimed in claim 2 or 3, wherein:
the elastic portion (122) faces an inside of the case (120), and
the fixed portion (123) faces an outside of the case (120).

5. The battery (100) as claimed in any one of claims 2 to 4, wherein the elastic portion (122) comprises an insertion surface (122-2) that is an inclined surface (122-3) with respect to a direction in which the elastic portion (122) is inserted into the groove portion (115).

6. The battery (100) as claimed in claim 5, wherein the groove portion (115) comprises an insertion guiding portion (115-1) that is an inclined surface (122-3) guiding insertion of the insertion surface (122-2).

7. The battery (100) as claimed in any one of claims 2 to 6, wherein if the protrusion (121, 121a) is inserted into the groove portion (115), the protrusion (121, 121a) presses the groove portion (115) laterally by an elastic restoring force of the elastic portion (122).

8. The battery (100) as claimed in any one of the preceding claims, wherein the protrusion (121, 121a) is in a straight extension section of the case (120).

9. The battery (100) as claimed in any one of the preceding claims, wherein the welding portion (130) is at a boundary formed by the outer step surface (126) of the case (120) and a lower surface (114) of the cap plate (110, 110').

10. The battery (100) as claimed in any one of the preceding claims, wherein a dent portion (115') is on a side wall of the groove portion (115).

11. The battery (100) as claimed in claim 10, wherein a projection portion (122a) corresponding to the dent portion (115') is on the side wall of an elastic portion (122) of the protrusion (121, 121a).

12. The battery (100) as claimed in any one of the preceding claims, wherein at least one of the case (120) and the cap plate (110, 110') includes stainless steel.

13. A method for manufacturing a battery (100), the method comprising:
coupling a case (120) to a cap plate (110, 110'), the case (120) accommodating an electrode assembly therein;
irradiating a boundary between the case (120) and the cap plate (110, 110') with a laser beam (11') 11;
rotating one of the cap plate (110, 110') and the case (120) to move the boundary to a location of the laser beam (11, 11');
stopping the irradiating when a welding portion (130) is along the boundary;
forming an inner step surface (125) and an outer step surface (126) on a protrusion (121, 121a) protruding from an upper surface (124) of the case (120); and
inserting the protrusion (121, 121a) in a groove portion (115), the inserting resulting in coupling of the case (120) and the cap plate (110, 110'),
wherein the cap plate (110, 110') comprises the groove portion (115) corresponding to the protrusion (121, 121a) on a lower surface (114) thereof.

14. The method as claimed in claim 13, further comprising removing foreign substances from the boundary using air (21) sprayed by a blower before the irradiating.

15. The method as claimed in claim 13 or 14, further comprising removing foreign substances from the boundary using air (21) sprayed by a blower during the irradiating.
